# EUROPÄISCHE PATENTSCHRIFT

(11) **EP 2 651 662 B1**
(45) Veröffentlichungstag und Bekanntmachung des Hinweises auf die Patenterteilung: **27.07.2016**
(21) Anmeldenummer: 11768056.1
(22) Anmeldetag: 14.10.2011
(51) Int. Cl.: B60C 11/13, B60C 11/03

(54) **FAHRZEUGLUFTREIFEN**
PNEUMATIQUE TIRE
PNEU

(30) Priorität: 14.12.2010 DE 102010061218
(43) Veröffentlichungstag der Anmeldung: 23.10.2013
(73) Patentinhaber: Continental Reifen Deutschland GmbH, 30165 Hannover (DE)
(72) Erfinder: BEHR, Ulrich, 30169 Hannover (DE)
(74) Vertreter: Preusser, Andrea
(86) Internationale Anmeldenummer: PCT/EP2011/068030
(87) Internationale Veröffentlichungsnummer: WO 2012/079804

(56) Entgegenhaltungen:
- EP-A1- 0 305 617
- WO-A1-2010/092987
- DE-A1-102009 003 593
- JP-A- 2003 191 715

## Beschreibung

Die Erfindung betrifft einen Fahrzeugluftreifen mit einem asymmetrischen Laufstreifenprofil mit einer für den Einsatz am Fahrzeug als zur Außenseite OU hinweisenden, die Außenschulter bildenden Reifenschulter und mit einer für den Einsatz am Fahrzeug als zur Innenseite IN des Fahrzeuges hinweisenden, die Innenschulter bildenden Reifenschulter und mit einem in axialer Richtung A des Reifens zwischen den Reifenschultern ausgebildeten mittleren Erstreckungsbereich, wobei in jeder Reifenschulter jeweils ein über den Umfang des Reifens erstrecktes Profilband und im mittleren Erstreckungsbereich wenigstens ein über den Umfang des Reifens erstrecktes Profilband - beispielsweise Profilblockreihe oder Profilrippe - ausgebildet ist, wobei das auf der Außenschulter ausgebildete Profilband aus einer zur Außenseite OU hinweisend angeordneten Profilblockreihe und aus einer unmittelbar in axialer Richtung daneben zur Innenseite IN hin benachbarten Profilrippe ausgebildet ist, wobei die Profilrippe der Außenschulter vom axial benachbarten Profilband des mittleren Erstreckungsbereiches durch eine über den Umfang des Fahrzeugluftreifens erstreckt ausgebildete Umfangsrille mit zwei Rillenwänden und einem Rillengrund getrennt ist, von denen die eine Rillenwand eine Flanke des benachbarten Profilbandes des mittleren Erstreckungsbereiches und die andere Rillenwand die zur Umfangsrille hin weisende Flanke der Profilrippe bildet, wobei die Profilblockreihe des Profilbandes der Außenschulter aus über den Umfang des Fahrzeugluftreifens hintereinander angeordneten und durch quer oder schräg verlaufende Querrillen von einander beabstandeten Profilblockelementen ausgebildet und zur Profilrippe hin von einer Flanke begrenzt ist, die sich von radial innen nach radial außen bis zu der die Profilblockreihe in radialer Richtung R nach außen begrenzenden Oberfläche erstreckt.

Derartige Fahrzeugluftreifen sind bekannt. Dabei soll durch die Asymmetrie gezielt die für den Einsatz am Fahrzeug als zur Außenseite des Reifens ausgebildete Reifenschulter, welche insbesondere für die Handling-Eigenschaften besonders wichtig ist, zur Erzielung dieser Handling-Eigenschaften funktional besonders ausgelegt werden. Die zur Fahrzeuginnenseite hinweisende Reifenschulter wird bei derartigen Reifen zur Erzielung anderer Fahreigenschaften besonders ausgelegt.

Zur Erzielung guter Handling-Eigenschaften ist es dabei wünschenswert, die Reifenaußenschulter mit einer hohen Steifigkeit des Schulterbereich in Quer- und in Umfangsrichtung auszubilden. Darüber hinaus sollen auch im Reifenaußenschulterbereich ausreichende Ableitung von Wasser ermöglicht und Griffkanten erzeugt werden, wodurch gute Aquaplaning-Eigenschaften und Nasshandlingeigenschaften begünstigt werden. Hierzu ist es bekannt, die Reifenaußenschulter mit einem Profilband aus einer axial äußeren Profilblockelementreihe auszubilden, welche durch eine schmale Umfangsrille von einer Profilrippe getrennt ist. Das aus Profilrippe und Profilblockreihe gebildete Profilband ist von dem zentralen Bereich des Laufstreifenprofils durch eine breite Umfangsrille getrennt. Durch derartige bekannte Ausbildungen wird durch die Profilrippe des in der Reifenaußenschulter ausgebildeten Profilbandes eine hohe Steifigkeit in Umfangsrichtung ermöglicht. Die Schulterprofilblockreihe ermöglicht mit ihren Querrillen die Aufnahme und Ableitung von Wasser aus der Reifenaußenschulter und bewirkt Querkanten für den Griff auf nasser Oberfläche. Die durch die schmale Umfangsrille voneinander getrennten Profilblockreihe und Profilrippe des Schulterbandes sind im Übergang zwischen Profilblockreihe und Profilrippe jedoch durch die Umfangsrippe bedingt flexibel mit reduzierter Steifigkeit in Querrichtung ausgebildet, wodurch bei Aufnahme von hohen Querkräften wie beim Handling geringe Einroll- und Verbiegeeffekte der Profilrippe ermöglicht werden. Hierdurch kann die Übertragung von Querkräften beim Handling noch beeinträchtigt werden. Neben der Flexibilität im Übergang zwischen Profilblockreihe und Profilrippe ist bei Übertragung hoher Querkräfte auch ein Einrollen der zwischen der die Profilrippe nach radial außen begrenzenden Oberfläche und der zur Reifenaußenseite weisenden, die Profilrippe begrenzenden Schulter ausgebildeten Kante möglich, wodurch die Übertragung von Querkräften weiter beeinträchtigt werden kann. Derartige Einrolleffekte können darüber hinaus Geräuschentwicklung begünstigen. Die relativ starke Belastung der axialen Außenbereiche der radial äußeren Oberfläche der Profilrippe bewirkt auf nassen Oberflächen außerdem eine Beeinträchtigung der schnellen Abfuhr des zwischen Reifen und Oberfläche befindlichen Wasserfilms.

Aus der WO 2010/092987 A1 ist ein derartiger Fahrzeugluftreifen gemäß den Merkmalen des Oberbegriffs von Anspruch 1 bekannt.

Der Erfindung liegt daher die Aufgabe zugrunde, derartige Fahrzeugluftreifen mit asymmetrischem Laufstreifenprofil mit einer vergleichmäßigt hohen Steifigkeit der Reifenaußenschulter bei guter gleichmäßiger Druckverteilung und somit mit guten Aquaplaningeigenschaften bei guten Trocken-und Nassgriffeigenschaften zu ermöglichen.

Die Aufgabe wird erfindungsgemäß durch die Ausbildung eines Fahrzeugluftreifens mit einem asymmetrischen Laufstreifenprofil mit einer für den Einsatz am Fahrzeug als zur Außenseite OU hinweisenden, die Außenschulter bildenden Reifenschulter und mit einer für den Einsatz am Fahrzeug als zur Innenseite IN des Fahrzeuges hinweisenden, die Innenschulter bildenden Reifenschulter und mit einem in axialer Richtung A des Reifens zwischen den Reifenschultern ausgebildeten mittleren Erstreckungsbereich, wobei in jeder Reifenschulter jeweils ein über den Umfang des Reifens erstrecktes Profilband und im mittleren Erstreckungsbereich wenigstens ein über den Umfang des Reifens erstrecktes Profilband - beispielsweise Profilblockreihe oder Profilrippe - ausgebildet ist, wobei das auf der Außenschulter ausgebildete Profilband aus einer zur Außenseite OU hinweisend angeordneten Profilblockreihe und aus einer unmittelbar in axialer Richtung daneben zur Innenseite IN hin benachbarten Profilrippe ausgebildet ist, wobei die Profilrippe der Außenschulter vom axial benachbarten Profilband des mittleren Erstreckungsbereiches durch eine über den Umfang des Fahrzeugluftreifens erstreckt ausgebildete Umfangsrille mit zwei Rillenwänden und einem Rillengrund getrennt ist, von denen die eine Rillenwand eine Flanke des benachbarten Profilbandes des mittleren Erstreckungsbereiches und die andere Rillenwand die zur Umfangsrille hin weisende Flanke der Profilrippe bildet, wobei die Profilblockreihe des Profilbandes der Außenschulter aus über den Umfang des Fahrzeugluftreifens hintereinander angeordneten und durch quer oder schräg verlaufende Querrillen von einander beabstandeten Profilblockelementen ausgebildet und zur Profilrippe hin von einer Flanke begrenzt ist, die sich von radial innen nach radial außen bis zu der die Profilblockreihe in radialer Richtung R nach außen begrenzenden Oberfläche erstreckt, gemäß den Merkmalen von Anspruch 1 gelöst, bei dem die Profilrippe des Profilbandes der Außenschulter nach radial außen mit einer Oberfläche begrenzt ist, die mit einer in den die Reifenachse aufweisenden Querschnittsebenen eine zum Reifen hin stetig gekrümmten Oberflächenkontur ausgebildet ist, welche sich mit ihrer Krümmung ausgehend von der die Profilrippe zur Umfangsrille hin begrenzenden Flanke der Profilrippe in axialer Richtung A zur Außenseite OU hin erstreckt und dort die Flanke der Profilblockreihe schneidet und welche sich in den Umfangserstreckungsabschnitten zwischen den benachbarten Profilblockelementen der Profilblockreihe in Fortführung der gekrümmten Oberfläche bis in die Querrillen hinein erstreckt und dort im axialen Abstand a > 0mm von den Flanken der Profilblockreihen innerhalb der Bodenaufstandsbreite T_{A} den Rillengrund der Querrillen schneidet.

Durch diese Ausbildung werden die Vorteile der asymmetrischen Ausbildung mit einer Außenschulter mit Profilblockreihe und Profilrippe zur Übertragung guter Handling-Eigenschaften mit hoher Umfangssteifigkeit bedingt durch die Profilrippe und der Aufnahme- und Ableitefähigkeit von Wasser sowie guter Griffkanten zum Nassgriff auf nasser Oberfläche bedingt durch die Profilblockreihe beibehalten. Darüber hinaus wird zusätzlich durch die Oberflächengestaltung der Profilrippe mit einem gekrümmten Verlauf ausgehend von der zur Umfangsrille hin gerichteten Flanke der Profilrippe bis hin in die Querrillen hinein und im Umfangserstreckungsbereich der Profilblockelemente bis in die Flanken der Profilblockelementreihe eine zusätzliche hohe Querversteifung des aus Profilblockreihe und Profilrippe gebildeten Profilbandes der Außenschulter erreicht, wobei auch der Übergang zwischen Profilblockreihe und Profilrippe eine hohe Quersteifigkeit, eine hohe Umfangssteifigkeit und eine hohe Biegesteifigkeit aufweist. Querkräfte und Umfangskräfte können hierdurch verbessert übertragen werden. Gleichzeitig wird durch die gekrümmte Ausbildung eine ballige Ausbildung der Profilrippe ermöglicht, wodurch eine verbesserte Druckverteilung zwischen Profilrippe und Straßenoberfläche ermöglicht wird. Einrolleffekte können vermieden und Wasser verbessert aus dem Kontaktflächenbereich zwischen Profilrippe und der Straßenoberfläche Richtung Querrillen abgeleitet werden, Hierdurch können verbesserte Trocken- und Nassgriffeigenschaften bei guten Handling- und Aquaplaningeigenschaften ermöglicht werden.

Besonders vorteilhaft ist die Ausbildung eines Fahrzeugluftreifens gemäß den Merkmalen von Anspruch 2, wobei die gekrümmte Oberfläche über ihre Erstreckung kreissegmentförmig mit einem Krümmungsradius R_{K} gekrümmt ausgebildet ist, wobei insbesondere 5mm≤R_{K}≤20mm ausgebildet ist. Dies ermöglicht einen guten Kompromiss zwischen Entwässerung, Einformbarkeit und Stabilisierung der zur Umfangsrille weisenden Profilblockelementenden.

Besonders vorteilhaft ist die Ausbildung eines Fahrzeugluftreifens gemäß den Merkmalen von Anspruch 3, wobei die nach radial außen die Profilrippe begrenzende gekrümmte Oberfläche in den die Reifenachse aufweisenden Querschnittsebenen ausgehend von der die Profilrippe zur Umfangsrille hin begrenzenden Flanke der Profilrippe in axialer Richtung A zur Außenseite OU bis zur Flanke der Profilblockreihe über eine Erstreckungslänge b mit 6mm ≤b ≤16mm erstreckt ist. Dies ermöglicht eine Optimierung der Profilrippe zur Erzielung ausreichender Versteifung bei guten Aquaplaningeigenschaften in Querrichtung.

Besonders vorteilhaft ist die Ausbildung eines Fahrzeugluftreifens gemäß den Merkmalen von Anspruch 4, wobei der Abstand a mit 3mm ≤ a ≤ 8mm ausgebildet ist. Dies ermöglicht ausreichend Negativanteil der Außenschulter für eine gute Querentwässerung bei ausreichender Anbindung der Schulterblöcke untereinander und an die Profilrippe zur Erzielung hoher Steifigkeit.

Besonders vorteilhaft zur Lösung des Zielkonfliktes guter Trockenhandlingeigenschaften und guter Aquaplaningeigenschaften in Querrichtung ist die Ausbildung eines Fahrzeugluftreifens gemäß den Merkmalen von Anspruch 5, wobei der Abstand a mit a = (b/2) ausgebildet ist.

Besonders vorteilhaft ist die Ausbildung eines Fahrzeugluftreitens gemäß den Merkmalen von Anspruch 6, wobei in den die Reifenachse beinhaltenden Schnittebenen die die Profilblockreihe der Außenschulter nach radial außen begrenzenden Oberfläche und die diese Profilblockreihe zur Innenseite IN hin begrenzende Flanke sich in einem Schnittpunkt S₂ schneiden, wobei das zum Profilband der Außenschulter hin benachbarte Profilband des mittleren Erstreckungsbereiches mit einer nach radial außen begrenzende Oberfläche ausgebildet ist, die in den die Reifenachse beinhaltenden Schnittebenen die das Profilband zur Außenseite OU hin begrenzende Flanke in einem Schnittpunkt S₄ schneidet, wobei in den die Reifenachse beinhaltenden Schnittebenen die gekrümmte Oberfläche der Profilrippe sich wenigstens soweit nach radial außen erstreckt, dass ihr in radialer Richtung R des Reifens gesehener Scheitelpunkt P eine radiale Position im Abstand h mit 0mm ≤ h ≤ 0,7mm von der Verbindungslinie der Schnittpunkte S₂ und S₄ aufweist, wobei die Position auf der oder in radialer Richtung R des Reifens außerhalb der Verbindungslinie der Schnittpunkte S₂ und S₄ ausgebildet ist. Hierdurch kann gewährleistet werden, dass die Profilrippe in ihrer radial äußeren Oberflächenkontur eine ausreichend stark ausgeprägte Balligkeit aufweist, die sich entweder in gleiche wirksame Höhe wie die benachbarten Profilblöcke oder darüber hinaus erstreckt. Dies ermöglicht eine verbesserte Wasserverdrängung aus dem Bereich der Profilrippe heraus.

Besonders vorteilhaft ist die Ausbildung eines Fahrzeugluftreifens gemäß den Merkmalen von Anspruch 7, wobei in den die Reifenachse beinhaltenden Schnittebenen die die Profilblockreihe der Außenschulter zur Innenseite IN hin begrenzende Flanke und die gekrümmte Oberfläche der Profilrippe sich in einem Schnittpunkt S₁ schneiden, wobei die die Profilrippe zur Umfangsrille hin begrenzende Flanke und die gekrümmte Oberfläche der Profilrippe sich in einem Schnittpunkt S₃ schneiden, wobei in den die Reifenachse beinhaltenden Schnittebenen die gekrümmte Oberfläche der Profilrippe sich bis in einen Abstand m von der Verbindungslinie der Schnittpunkte S₃ und S₁ erstreckt mit 0,3mm ≤ m ≤ 0,7mm. Hierdurch kann gewährleistet werden, dass die Profilrippe in ihrer radial äußeren Oberflächenkontur eine ausreichend stark ausgeprägte Balligkeit aufweist. Dies ermöglicht eine verbesserte Wasserverdrängung aus dem Bereich der Profilrippe heraus.

Die Erfindung wird im Folgenden an Hand der in den Figuren 1 bis 4 dargestellten Ausführungsbeispiele näher erläutert. Hierin zeigen
- Fig.1: eine Draufsicht auf einen zur Außenschulter hin ausgebildeten Abschnitt eines asymmetrischen Laufstreifenprofiles eines PKW-Fahrzeugluftreifens,
- Fig.2: Fahrzeugluftreifen von Fig.1 in Schnittdarstellung gemäß Schnitt II-II,
- Fig.3: Fahrzeugluftreifen von Fig.1 in Schnittdarstellung gemäß Schnitt III-III,
- Fig.4: ein zur Außenschulter hin ausgebildeter Abschnitt des Fahrzeugluftreifen von Fig.1 in perspektivischer Schnittdarstellung.

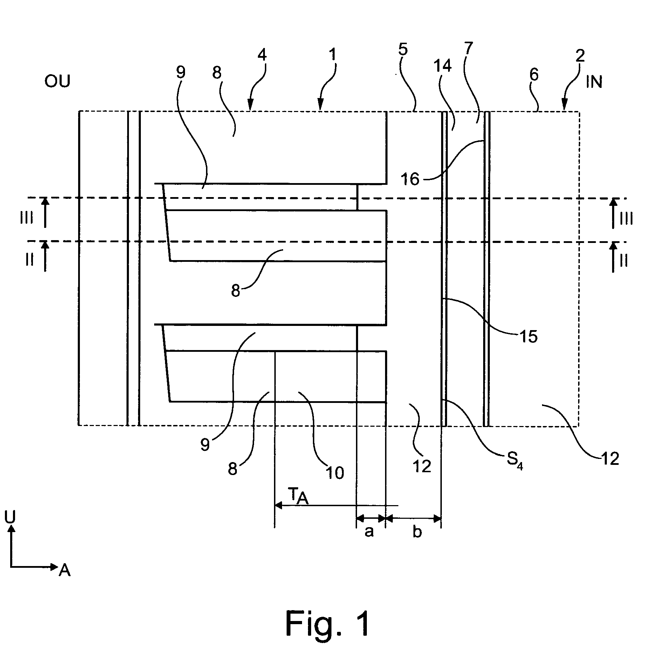

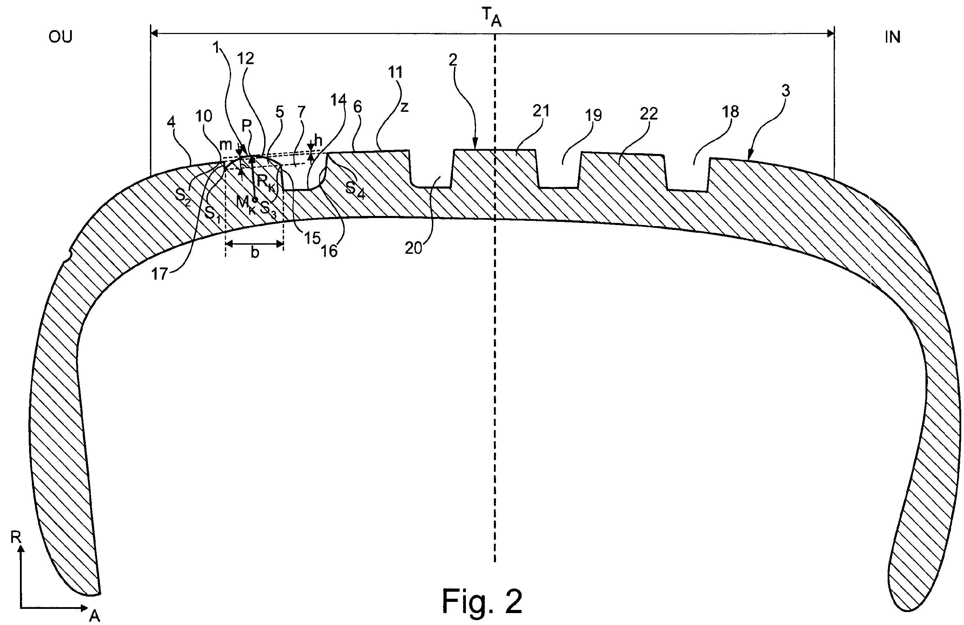

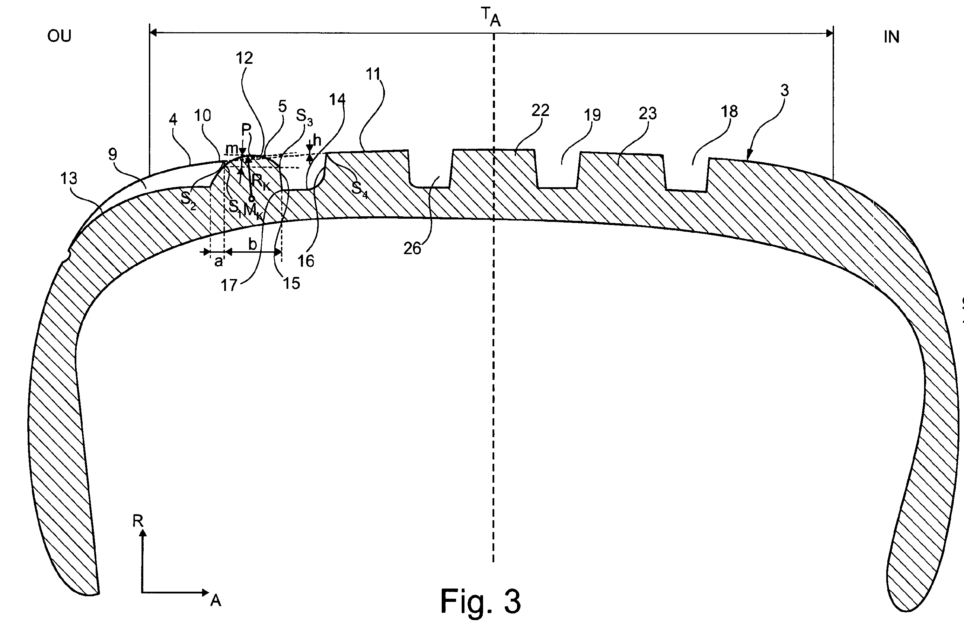

Die Fig. 1 bis 4 zeigen einen Fahrzeugluftreifen mit asymmetrischem Laufstreifenprofil. Bei dem Fahrzeugluftreifen ist auf der für den Betrieb im Fahrzeug zur Außenseite OU des Fahrzeuges ausgebildeten Reifenschulter (Außenschulter) des Fahrzeugluftreifens mit einem Profilband 1 ausgebildet. Auf der für den Betrieb im Fahrzeug als zur Fahrzeuginnenseite IN ausgebildeten Reifenschulter (Innenschulter) ist eine Profilblockreihe 3 ausgebildet. In dem zwischen dem Profilband 1 der Außenschulter und der Profilblockreihe 3 der Innenschulter ausgebildeten mittleren axialen Erstreckungsabschnitt 2 des Laufstreifenprofils sind in axialer Richtung A des Fahrzeugluftreifens nebeneinander angeordnet eine Profilrippe 6, eine Profilrippe 21 und eine Profilrippe 22 ausgebildet. Die Profilrippe 6, die Profilrippe 21 und die Profilrippe 22 sind jeweils über den gesamten Umfang des Fahrzeugluftreifens erstreckt ausgebildet und in Umfangsrichtung U des Fahrzeugluftreifens ausgerichtet. Die Profilrippe 6 ist zu der zur Fahrzeugaußenseite OU hin ausgebildeten Reifenschulter in axialer Richtung A durch eine über den Fahrzeugluftreifen erstreckte und in Umfangsrichtung U des Fahrzeugluftreifens ausgerichtete Umfangsrille 7 begrenzt. Die Profilrippe 6 ist zur Fahrzeuginnenseite IN hin in axialer Richtung A durch eine über den gesamten Umfang des Fahrzeugluftreifens erstreckte und in Umfangsrichtung U ausgerichtete Umfangsrille 20 begrenzt. Die Umfangsrille 20 trennt in axialer Richtung A die Profilrippe 11 von der Profilrippe 21. Die Profilrippe 21 und die Profilrippe 22 sind in axialer Richtung A durch eine über den gesamten Umfang des Fahrzeugluftreifens erstreckte und in Umfangsrichtung U ausgerichtete Umfangsrille 19 von einander beabstandet. Die Profilrippe 22 und die Profilblockreihe 3 sind durch eine über den gesamten Umfang des Fahrzeugluftreifens erstreckte und in Umfangsrichtung U ausgerichtete Umfangsrille 18 in axialer Richtung A voneinander beabstandet. Die Profilblockreihe 3 ist in bekannter Weise aus in Umfangsrichtung U hintereinander angeordneten und jeweils durch Querrillen voneinander beabstandeten Profilblockelementen ausgebildet.

Das Profilband 1 der Außenschulter des Fahrzeugreifens ist aus einer in axialer Richtung A zur Innenseite IN hin ausgebildeten über den gesamten Umfang des Fahrzeugluftreifens erstreckten Profilrippe 5 und einer axial benachbart hierzu zur Außenseite OU hin ausgebildeten Profilblockelementreihe 4 ausgebildet. Die Profilblockelementreihe 4 ist aus in Umfangsrichtung U hintereinander angeordneten und jeweils durch Querrillen 9 voneinander beabstandeten Profilblockelementen 8 ausgebildet.

Die Umfangsrille 7 ist in radialer Richtung R des Fahrzeugluftreifens nach innen von einem Rillengrund 14, welcher über den gesamten Umfang des Fahrzeugluftreifens erstreckt ausgebildet ist, begrenzt und in axialer Richtung A zur Profilrippe 11 hin durch eine Rillenwand, welche die zur Umfangsrille 7 hinweisende Flanke 16 der Profilrippe 11 bildet und sich in radialer Richtung R ausgehend vom Rillengrund 14 bis zu der die Profilrippe 6 in radialer Richtung R nach außen hin begrenzenden, die Bodenkontaktoberfläche bildenden radial äußeren Oberfläche 11 erstreckt und diese in einer Schnittlinie S₄ schneidet.

Die Profilblockelementreihe 4 ist in radialer Richtung R nach außen durch eine die Bodenkontaktoberfläche bildende Mantelfläche 10 begrenzt, welche ebenso wie die Bodenkontaktoberfläche 11 der Profilrippe 6 Teil der Reifenaußenkontur ist.

Die Profilblockelementreihe 4 ist in axialer Richtung A nach innen zur Profilrippe 5 hin mit einer in radialer Richtung R nach außen bis zur radial äußeren Oberfläche 10 erstreckten Flanke 17 begrenzt, welche die radial äußere Oberfläche 10 der Profilblockelementreihe 4 in einer Schnittlinie S₂ schneidet.

Die Querrillen 9 der Profilblockelementreihe 4 sind in radialer Richtung R nach innen hin jeweils durch einen Rillengrund 13 begrenzt, welcher sich jeweils längs der Erstreckung der Querrille 9 erstreckt.

In den Figuren ist die Bodenaufstandsbreite T_{A} des Reifens dargestellt, welche sich in axialer Richtung A zur Außenseite OU hin bis in den axialen Erstreckungsbereich der Profilblockreihe 4 erstreckt.

Die Profilrippe 5 ist in axialer Richtung A zur Fahrzeuginnenseite IN hin durch eine sich in radialer Richtung R aus dem Rillengrund 14 der Umfangsrille 7 nach außen erstreckte Flanke 15 begrenzt, welche die zur Profilrippe 5 hinweisende Rillenwand der Umfangsrille 7 bildet. Die Profilrippe 5 ist in radialer Richtung R nach außen hin durch eine radial äußere Oberfläche 12 begrenzt.

Die radial äußere Oberfläche 12 der Profilrippe 5 ist in den die Reifenachse aufweisenden Schnittebenen jeweils mit einer zur Reifeninnenseite hin gekrümmten Konturlinie ausgebildet. Die gekrümmte Konturlinie ist eine um einen auf der von der radial äußeren Oberfläche 12 zur radialen Innenseite des Reifens hin weisenden Seite ausgebildeten Mittelpunkt Mₖ gebildete Kreissegmentkonturlinie mit dem Radius R_{K}. Die gekrümmte Konturlinie der radial äußeren Oberfläche 12 nimmt in den die Reifenachse aufweisenden Schnittebenen in einem Punkt P ihre in radialer Richtung R des Fahrzeugluftreifens gemessene maximale radial äußere Position ein, wobei der Punkt P in einer axialen Position zwischen der Flanke 17 der Profilblockelementreihe 4 und der Flanke 15 der Profilrippe 5 angeordnet ist. Der Punkt P ist in den die Reifenachse beinhaltenden Schnittebenen in radialem Abstand h von der Verbindungslinie der ausgebildeten Schnittpunkte S₂ und S₄ mit 0,0mm ≤ h ≤ 0,7mm angeordnet. Der Punkt P liegt dabei zumindest auf der Verbindungslinie der Schnittpunkte S₂ und S₄ oder radial außerhalb davon.

Die gekrümmte Konturlinie der radial äußeren Oberflächen 12 erstreckt sich ausgehend vom Punkt P unter stetiger Abnahme der radialen Position in axialer Richtung zur Fahrzeuginnenseite IN bis zur Flanke 15 der Profilrippe 5 und schneidet diese in einer Schnittlinie S₃. Die gekrümmte Konturlinie der radial äußeren Oberfläche 12 erstreckt sich ausgehend vom Punkt P unter stetiger Abnahme der radialen Position in axialer Richtung zur Fahrzeugaußenseite OU hin bis zur Flanke 17 der Profilblockelementreihe 4 und schneidet diese in einer Schnittlinie S₁ in einer radialen Position unterhalb der Schnittlinie S₂. Im Umfangserstreckungsbereich der Querrillen 9 erstreckt sich die gekrümmte Konturlinie der radial äußeren Oberfläche 12 ihrer Krümmung folgend weiter nach axial außen unter weiterer stetiger Abnahme der radialen Position bis in die Querrillen 9 hinein und schneidet den Rillengrund 13 der Querrillen 9 im in axialer Richtung A gemessenen Abstand a von der Schnittlinie S₁ mit der Flanke 17 der Profilblockelementreihe 4. Der Schnitt der äußeren Oberfläche 12 mit dem Rillengrund 13 liegt innerhalb der Bodenaufstandsbreite T_{A}. Der in axiale Erstreckungsbereich zwischen Schnittlinie S₃ der radial äußeren Oberfläche 12 der Profilrippe 5 mit der Flanke 15 zur Schnittlinie S1 der radial äußeren Oberfläche 12 der Profilrippe 5 mit der Flanke 17 der Profilblockelementreihe 4 ist mit einer in axialer Rcihtung A gemessenen Erstreckungsbreite b mit 6,0mm ≤ b ≤ 16mm ausgebildet.

Der Abstand a der Erstreckung der radial äußeren Oberfläche 12 in die Querrille 9 hinein von der Schnittlinie S₁ bis zum Schnitt mit dem Rillengrund 13 ist mit 3,0mm ≤ a ≤ 8,0mm ausgebildet.

In einem Ausführungsbeispiel ist a mit a = (b/2) ausgebildet. Beispielsweise ist b und a mit b = 10mm und a = 5mm ausgebildet.

Die radial äußere Oberfläche 12 erstreckt sich mit ihrer Krümmung in den die Reifenachse beinhaltenden Querschnittsebenen jeweils radial oberhalb der Verbindungslinie der Schnittpunkte S₁ und S₃ bis in einen maximalen Abstand m von der Verbindungslinie der Schnittpunkte S₁ und S₃ mit 0,3mm ≤ m ≤ 0,7mm. Beispielsweise ist m = 0,5mm gewählt.

Der Krümmungsradius R_{K} ist in Abhängigkeit von der Breite a, von der zu erzielenden Versteifung und von h ausgebildet. Der Krümmungsradius R_{K} ist dabei mit 8mm ≤ R_{K} ≤ 20mg ausgebildet. In einem Ausführungsbeispiel ist R_{K} = 11mm ausgebildet.

In Fig. 1 ist ein Ausführungsbeispiel dargestellt, bei dem die Profilblockelemente 8 der Profilblockreihe 4 zusätzlich zwischen den Querrillen 9 mit parallel zu den Querrillen 9 verlaufenden Feineinschnitten 24 ausgebildet sind.

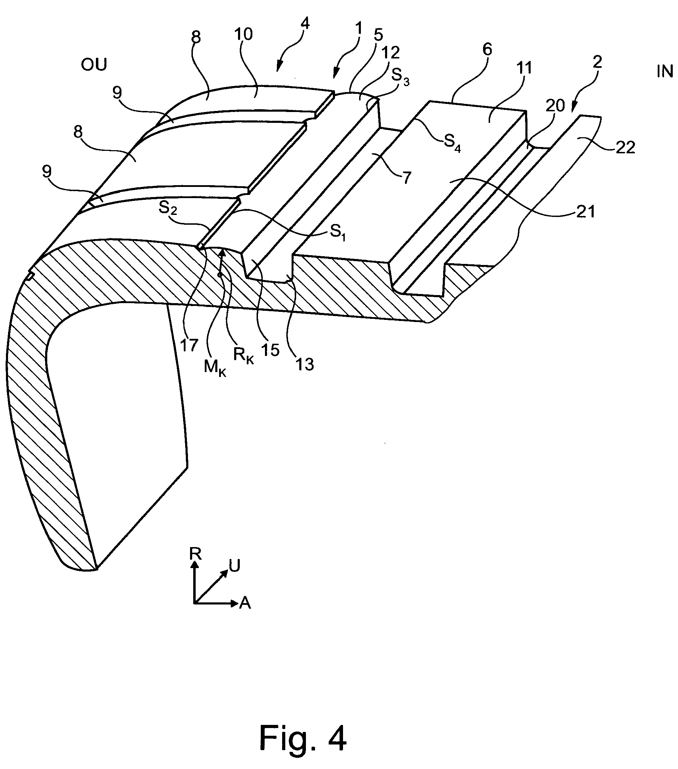

In Fig. 4 ist eine Ausführung ohne derartige Feineinschnitte 24 dargestellt.

### Bezugszeichenliste

### (Teil der Beschreibung)

- 1: Profilband der Außenschulter des Fahrzeugreifens
- 2: Mittlerer Erstreckungsabschnitt des Laufstreifenprofils
- 3: Profilblockreihe der Innenschulter
- 4: Profilblockreihe
- 5: Profilrippe
- 6: Profilrippe
- 7: Umfangsrille
- 8: Profilblockelement
- 9: Querrille
- 10: Radial äußere Oberfläche
- 11: Radial äußere Oberfläche
- 12: Radial äußere Oberfläche
- 13: Rillengrund
- 14: Rillengrund
- 15: Flanke
- 16: Flanke
- 17: Flanke
- 18: Umfangsrille
- 19: Umfangsrille
- 20: Umfangsrille
- 21: Profilblockreihe
- 22: Profilrippe
- 23: Profilrippe
- 24: Feineinschnitt

## Patentansprüche

1. Fahrzeugluftreifen mit einem asymmetrischen Laufstreifenprofil mit einer für den Einsatz am Fahrzeug als zur Außenseite OU hinweisenden, die Außenschulter bildenden Reifenschulter und mit einer für den Einsatz am Fahrzeug als zur Innenseite IN des Fahrzeuges hinweisenden, die Innenschulter bildenden Reifenschulter und mit einem in axialer Richtung A des Reifens zwischen den Reifenschultern ausgebildeten mittleren Erstreckungsbereich, wobei in jeder Reifenschulter jeweils ein über den Umfang des Reifens erstrecktes Profilband (1,3) und im mittleren Erstreckungsbereich wenigstens ein über den Umfang des Reifens erstrecktes Profilband (2) - beispielsweise Profilblockreihe oder Profilrippe - ausgebildet ist, wobei das auf der Außenschulter ausgebildete Profilband (1) aus einer zur Außenseite OU hinweisend angeordneten Profilblockreihe (4) und aus einer unmittelbar in axialer Richtung A daneben zur Innenseite IN hin benachbarten Profilrippe (5) ausgebildet ist, wobei die Profilrippe (5) der Außenschulter vom axial benachbarten Profilband (6) des mittleren Erstreckungsbereiches (2) durch eine über den Umfang des Fahrzeugluftreifens erstreckt ausgebildete Umfangsrille (7) mit zwei Rillenwänden und einem Rillengrund getrennt ist, von denen die eine Rillenwand eine Flanke (16) des benachbarten Profilbandes (6) des mittleren Erstreckungsbereiches (2) und die andere Rillenwand die zur Umfangsrille (7) hin weisende Flanke (15) der Profilrippe (5) bildet, wobei die Profilblockreihe (4) des Profilbandes (1) der Außenschulter aus über den Umfang des Fahrzeugluftreifens hintereinander angeordneten und durch quer oder schräg verlaufende Querrillen (9) von einander beabstandeten Profilblockelementen (8) ausgebildet und zur Profilrippe (5) hin von einer Flanke (17) begrenzt ist, die sich von radial innen nach radial außen bis zu der die Profilblockreihe (4) in radialer Richtung R nach außen begrenzenden Oberfläche (10) erstreckt,
**dadurch gekennzeichnet,**
**dass** die Profilrippe (5) des Profilbandes (1) der Außenschulter nach radial außen mit einer Oberfläche (12) begrenzt ist, die mit einer in den **Querschnittebenen des Fahrzeugluftreifens, die die Reifenachse beinhalten**, zum Reifen hin stetig gekrümmten Oberflächenkontur ausgebildet ist, welche sich mit ihrer Krümmung ausgehend von der die Profilrippe (5) zur Umfangsrille (7) hin begrenzenden Flanke (15) der Profilrippe (5) in axialer Richtung A zur Außenseite OU hin erstreckt und dort die Flanke (17) der Profilblockreihe (4) schneidet und welche sich in den Umfangserstreckungsabschnitten zwischen den benachbarten Profilblockelementen (8) der Profilblockreihe (4) in Fortführung der gekrümmten Oberfläche (12) bis in die Querrillen (9) hinein erstreckt und dort im axialen Abstand a > 0mm von den Flanken (17) der Profilblockreihen (4) innerhalb der Bodenaufstandsbreite T_{A} den Rillengrund (13) der Querrillen (9) schneidet.

2. Fahrzeugluftreifen gemäß den Merkmalen von Anspruch 1,
wobei die gekrümmte Oberfläche (12) über ihre Erstreckung kreissegmentförmig mit einem Krümmungsradius R_{K} gekrümmt ausgebildet ist, wobei insbesondere 8mm ≤ R_{K} ≤ 20mm ausgebildet ist.

3. Fahrzeugluftreifen gemäß den Merkmalen,
wobei die nach radial außen die Profilrippe (5) begrenzende gekrümmte Oberfläche (12) in den die Reifenachse aufweisenden Querschnittsebenen ausgehend von der die Profilrippe (5) zur Umfangsrille (7) hin begrenzenden Flanke (15) der Profilrippe (5) in axialer Richtung A zur Außenseite OU bis zur Flanke (17) der Profilblockreihe (4) über eine Erstreckungslänge b mit 6mm ≤ b ≤ 16mm erstreckt ist.

4. Fahrzeugluftreifen gemäß den Merkmalen von einem oder mehreren der vorangegangenen Ansprüche,
wobei der Abstand a mit 3mm ≤ a ≤ 8mm ausgebildet ist.

5. Fahrzeugluftreifen gemäß den Merkmalen von einem oder mehreren der vorangegangenen Ansprüche,
wobei der Abstand a mit a = (b/2) ausgebildet ist.

6. Fahrzeugluftreifen gemäß den Merkmalen von einem oder mehreren der vorangegangenen Ansprüche,
wobei in den **Schnittebenen des Fahrzeugluftreifens, die die Reifenachse beinhalten,** die die Profilblockreihe (4) der Außenschulter nach radial außen begrenzenden Oberfläche (10) und die diese Profilblockreihe (4) zur Innenseite IN hin begrenzende Flanke (17) sich in einem Schnittpunkt S₂ schneiden, wobei das zum Profilband (1) der Außenschulter hin benachbarte Profilband (6) des mittleren Erstreckungsbereiches (2) mit einer nach radial außen begrenzende Oberfläche (11) ausgebildet ist, die in den die Reifenachse beinhaltenden Schnittebenen die das Profilband (6) zur Außenseite OU hin begrenzende Flanke (16) in einem Schnittpunkt S₄ schneidet,
wobei in den die Reifenachse beinhaltenden Schnittebenen die gekrümmte Oberfläche (12) der Profilrippe (5) sich wenigstens soweit nach radial außen erstreckt, dass ihr in radialer Richtung R des Reifens gesehener Scheitelpunkt P eine radiale Position im Abstand h mit 0mm ≤ h ≤ 0,7mm von der Verbindungslinie der Schnittpunkte S₂ und S₄ aufweist, wobei die Position auf der oder in radialer Richtung R des Reifens außerhalb der Verbindungslinie der Schnittpunkte S₂ und S₄ ausgebildet ist.

7. Fahrzeugluftreifen gemäß den Merkmalen von einem oder mehreren der vorangegangenen Ansprüche,
wobei in den **Schnittebenen des Fahrzeugluftreifens, die die Reifenachse beinhalten,** die die Profilblockreihe (4) der Außenschulter zur Innenseite IN hin begrenzende Flanke (17) und die gekrümmte Oberfläche (12) der Profilrippe (5) sich in einem Schnittpunkt S₁ schneiden, wobei die die Profilrippe (5) zur Umfangsrille (7) hin begrenzende Flanke (15) und die gekrümmte Oberfläche (12) der Profilrippe (5) sich in einem Schnittpunkt S₃ schneiden,
wobei in den die Reifenachse beinhaltenden Schnittebenen die gekrümmte Oberfläche (12) der Profilrippe (5) sich bis in einen Abstand m von der Verbindungslinie der Schnittpunkte S₁ und S₃ erstreckt mit 0,3mm ≤ m ≤ 0,7mm.

## Claims

1. Pneumatic vehicle tyre having an asymmetrical tread profile with a tyre shoulder which, for use on the vehicle, faces the outer side OU and forms the outer shoulder and with a tyre shoulder which, for use on the vehicle, faces the inner side IN of the vehicle and forms the inner shoulder, and with a middle region of extent formed between the tyre shoulders in the axial direction A of the tyre, wherein in each tyre shoulder there is respectively formed a profile band (1, 3) which is made to extend over the circumference of the tyre and in the middle region of extent there is formed at least one profile band (2) which is made to extend over the circumference of the tyre - for example a profile block row or a profile rib -, wherein the profile band (1) formed on the outer shoulder is formed by a profile block row (4) arranged facing the outer side OU and by a profile rib (5) directly adjacent thereto towards the inner side IN in the axial direction A, wherein the profile rib (5) of the outer shoulder is separated from the axially adjacent profile band (6) of the middle region of extent (2) by a circumferential groove (7), which is formed so as to extend over the circumference of the pneumatic vehicle tyre and has two groove walls and a groove base, of which the one groove wall forms a flank (16) of the adjacent profile band (6) of the middle region of extent (2) and the other groove wall forms the flank (15) of the profile rib (5) that is facing the circumferential groove (7), wherein the profile block row (4) of the profile band (1) of the outer shoulder is formed by profile block elements (8) arranged one behind the other over the circumference of the pneumatic vehicle tyre and spaced apart from one another by transversely or obliquely running transverse grooves (9) and is bounded with respect to the profile rib (5) by a flank (17), which is made to extend from the inside outwards in the radial sense up to the surface (10) outwardly delimiting the profile block row (4) in the radial direction R, **characterized**
**in that** the profile rib (5) of the profile band (1) of the outer shoulder is bounded radially outwardly by a surface (12) which is formed with a surface contour which, in the cross-sectional planes of the pneumatic vehicle tyre that contain the tyre axis, is continuously curved towards the tyre and with its curvature is made to extend from the flank (15) of the profile rib (5) that bounds the profile rib (5) towards the circumferential groove (7) towards the outer side OU in the axial direction A and intersects there the flank (17) of the profile block row (4), and which contour is made to extend in the portions of circumferential extent between the adjacent profile block elements (8) of the profile block row (4) as a continuation of the curved surface (12) into the transverse grooves (9) and intersects there the groove base (13) of the transverse grooves (9) at the axial distance a > 0 mm from the flanks (17) of the profile block rows (4) within the ground contact width T_{A}.

2. Pneumatic vehicle tyre according to the features of Claim 1,
wherein the curved surface (12) is formed as curved in the form of a segment of a circle over its extent, with a radius of curvature R_{K}, wherein in particular it is formed such that 5 mm ≤ R_{K} ≤ 20 mm.

3. Pneumatic vehicle tyre according to the features, wherein the curved surface (12) bounding the profile rib (5) radially outwards is made to extend in the cross-sectional planes that have the tyre axis from the flank (15) of the profile rib (5) that bounds the profile rib (5) towards the circumferential groove (7) towards the outer side OU in the axial direction A up to the flank (17) of the profile block row (4) over a length of extent b where 6 mm ≤ b ≤ 16 mm.

4. Pneumatic vehicle tyre according to the features of one or more of the preceding claims,
wherein the distance a is formed with 3 mm ≤ a ≤ 8 mm.

5. Pneumatic vehicle tyre according to the features of one or more of the preceding claims,
wherein the distance a is formed with a = (b/2).

6. Pneumatic vehicle tyre according to the features of one or more of the preceding claims,
wherein, in the sectional planes of the pneumatic vehicle tyre that contain the tyre axis, the surface (10) bounding the profile block row (4) of the outer shoulder radially outwards and the flank (17) bounding this profile block row (4) towards the inner side IN intersect at a point of intersection S₂, wherein the profile band (6) of the middle region of extent (2) that is adjacent to the profile band (1) of the outer shoulder is formed with a radially outwardly bounding surface (11), which, in the sectional planes containing the tyre axis, intersects the flank (16) bounding the profile band (6) towards the outer side OU at a point of intersection S₄,
wherein, in the sectional planes containing the tyre axis, the curved surface (12) of the profile rib (5) is made to extend at least so far radially outwards that its vertex point P, seen in the radial direction R of the tyre, has a radial position at the distance h from the joining line of the points of intersection S₂ and S₄, where 0 mm ≤ h ≤ 0.7 mm, wherein the position is formed on the joining line of the points of intersection S₂ and S₄ or outside the joining line in the radial direction R of the tyre.

7. Pneumatic vehicle tyre according to the features of one or more of the preceding claims,
wherein, in the sectional planes of the pneumatic vehicle tyre that contain the tyre axis, the flank (17) bounding the profile block row (4) of the outer shoulder towards the inner side IN and the curved surface (12) of the profile rib (5) intersect at a point of intersection S₁, wherein the flank (15) bounding the profile rib (5) towards the circumferential groove (7) and the curved surface (12) of the profile rib (5) intersect at a point of intersection S₃,
wherein, in the sectional planes containing the tyre axis, the curved surface (12) of the profile rib (5) is made to extend up to a distance m from the joining line of the points of intersection S₁ and S₃ where 0.3 mm ≤ m ≤ 0.7 mm.

## Revendications

1. Pneumatique de véhicule comprenant un profil de bande de roulement asymétrique avec un épaulement de pneu tourné vers le côté extérieur OU formant l'épaulement extérieur pour l'utilisation sur le véhicule et avec un épaulement de pneu tourné vers le côté intérieur IN du véhicule, formant l'épaulement intérieur pour l'utilisation sur le véhicule et avec une région d'étendue centrale réalisée dans la direction axiale A du pneu entre les épaulements de pneu, dans chaque épaulement de pneu étant réalisée à chaque fois une bande profilée (1, 3) s'étendant sur la périphérie du pneu et, dans la région d'étendue centrale, au moins une bande profilée (2) s'étendant sur la périphérie du pneu, par exemple une rangée de blocs profilés ou une nervure profilée, la bande profilée (1) réalisée sur l'épaulement extérieur étant réalisée à partir d'une rangée de blocs profilés (4) disposée de manière tournée vers le côté extérieur OU et à partir d'une rainure profilée (5) adjacente à celle-ci directement dans la direction axiale A et tournée vers le côté intérieur IN, la nervure profilée (5) de l'épaulement extérieur étant séparée de la bande profilée axialement adjacente (6) de la région d'étendue centrale (2) par une gorge périphérique (7) réalisée de manière à s'étendre sur la périphérie du pneumatique de véhicule avec deux parois de gorge et un fond de gorge, dont une paroi de gorge forme un flanc (16) de la bande profilée adjacente (6) de la région d'étendue centrale (2) et l'autre paroi de gorge forme le flanc (15) de la nervure profilée (5) tournée vers la gorge périphérique (7), la rangée de blocs profilés (4) de la bande profilée (1) de l'épaulement extérieur étant réalisée à partir d'éléments de blocs profilés (8) disposés les uns derrière les autres sur la périphérie du pneumatique de véhicule et séparés les uns des autres par des gorges transversales (9) s'étendant transversalement ou obliquement et étant limité vers la nervure profilée (5) par un flanc (17) qui s'étend depuis radialement à l'intérieur vers radialement à l'extérieur jusqu'à la surface (10) délimitant la rangée de blocs profilés (4) vers l'extérieur dans la direction radiale R, **caractérisé en ce que**
la nervure profilée (5) de la bande profilée (1) de l'épaulement extérieur est limitée radialement vers l'extérieur par une surface (12) qui est réalisée avec un contour de surface de courbure constante vers le pneumatique dans les plans de section transversale du pneumatique de véhicule qui contiennent l'axe du pneu, lequel contour de surface s'étend avec sa courbure à partir du flanc (15) de la nervure profilée (5) délimitant la nervure profilée (5) vers la gorge périphérique (7) dans la direction axiale A vers le côté extérieur OU et de là coupe le flanc (17) de la rangée de blocs profilés (4) et s'étend dans les portions d'étendue périphérique entre les éléments de blocs profilés adjacents (8) de la rangée de blocs profilés (4) dans le prolongement de la surface courbe (12) jusque dans les gorges transversales (9) et de là coupe le fond de gorge (13) des gorges transversales (9) à une distance axiale a > 0 mm des flancs (17) des rangées de blocs profilés (4) à l'intérieur de la largeur d'appui au sol T_{A}.

2. Pneumatique de véhicule selon les caractéristiques de la revendication 1, dans lequel la surface courbe (12) est réalisée avec une courbure sur son étendue en forme de segment circulaire avec un rayon de courbure R_{K}, avec 5 mm ≤ R_{K} ≤ 20 mm.

3. Pneumatique de véhicule selon les caractéristiques, dans lequel la surface courbe (12) délimitant radialement vers l'extérieur la nervure profilée (5) s'étend dans les plans en section transversale présentant l'axe du pneu à partir du flanc (15) de la nervure profilée (5) délimitant la nervure profilée (5) vers la gorge périphérique (7) dans la direction axiale A vers le côté extérieur OU jusqu'au flanc (17) de la rangée de blocs profilés (4) sur une longueur d'étendue b, avec 6 mm ≤ b ≤ 16 mm.

4. Pneumatique de véhicule selon les caractéristiques d'une ou plusieurs des revendications précédentes, dans lequel la distance a est réalisée avec 3 m ≤ a ≤ 8 mm.

5. Pneumatique de véhicule selon les caractéristiques d'une ou plusieurs des revendications précédentes, dans lequel la distance a est réalisée avec a = (b/2).

6. Pneumatique de véhicule selon les caractéristiques d'une ou plusieurs des revendications précédentes, dans lequel, dans les plans de coupe du pneumatique de véhicule qui contiennent l'axe du pneu, la surface (10) délimitant la rangée de blocs profilés (4) de l'épaulement extérieur radialement vers l'extérieur et le flanc (17) délimitant cette rangée de blocs profilés (4) vers le côté intérieur IN se coupent en un point d'intersection S2, la bande profilée (6) de la région d'étendue centrale (2), adjacente vers la bande profilée (1) de l'épaulement extérieur, étant réalisée avec une surface (11) délimitant radialement vers l'extérieur, qui, dans les plans de coupe contenant l'axe du pneu, coupe le flanc (16) délimitant la bande profilée (6) vers le côté extérieur OU en un point d'intersection S₄,
la surface courbe (12) de la nervure profilée (5), dans les plans de coupe contenant l'axe du pneu, s'étendant radialement vers l'extérieur au moins dans une mesure telle que son sommet P, vu dans la direction radiale R du pneu, présente une position radiale à une distance h, avec 0 mm ≤ h ≤ 0,7 mm de la ligne de jonction des points d'intersection S₂ et S₄, la position étant réalisée sur la ligne de jonction des points d'intersection S₂ et S₄ ou dans la direction radiale R du pneu à l'extérieur de cette ligne de jonction.

7. Pneumatique de véhicule selon les caractéristiques d'une ou plusieurs des revendications précédentes, dans lequel, dans les plans de coupe du pneumatique de véhicule qui contiennent l'axe du pneu, le flanc (17) délimitant la rangée de blocs profilés (4) de l'épaulement extérieur vers le côté intérieur IN et la surface courbe (12) de la nervure profilée (5) se coupent en un point d'intersection S₁, le flanc (15) délimitant la nervure profilée (5) vers la gorge périphérique (7) et la surface courbe (12) de la nervure profilée (5) se coupant en un point d'intersection S₃, la surface courbe (12) de la nervure profilée (5), dans les plans de coupe contenant l'axe du pneu, s'étendant jusqu'à une distance m de la ligne de jonction des points d'intersection S₁ et S₃, avec 0,3 mm ≤ m ≤ 0,7 mm.
